# EUROPEAN PATENT APPLICATION

(11) **EP 4 844 371 A1**
(43) Date of publication of application: **25.11.2026**
(21) Application number: 25178007.8
(22) Date of filing: 21.05.2025
(51) Int. Cl.: G01N 19/04, G01N 1/28, G01N 3/24, G01N 3/62

(54) **LAP SHEAR TRAY**

(71) Applicant: Henkel AG & Co. KGaA, 40589 Düsseldorf (DE)
(72) Inventor: Albiger, Jonas, 40599 Düsseldorf (DE); Pamvouxoglou, Andreas, 40591 Düsseldorf (DE); Walter, Robin, 40223 Düsseldorf (DE)

(57) **Abstract**

The invention relates to a device (1) for use in the preparation of samples (2) for a lap shear test, comprising a base part (3) on which at least one first substrate (4) and one second substrate (6) to be bonded to the first substrate (4) in an overlap region (5) can be placed, wherein first guide means (7) and second guide means (8) are formed on the base part (3), such that the first substrate (4) can be placed on the base part (3) in a given orientation by means of the first guide means (7) and the second substrate (6) can be placed on the base part (3) in a given orientation with respect to the first substrate (4) by means of the second guide means (8), wherein the guide means (7, 8) are designed such that the overlap region (5) between the first substrate (4) and the second substrate (6) is variably adjustable, wherein the device (1) comprises at least one exchangeable inlay (9), which can be detachably connected to the base part (3) and is provided for interposition between the base part (3) and the second substrate (6), wherein the thickness D of an adhesive layer (10) to be formed between the first substrate (4) and the second substrate (6) can be determined via the height H of the inlay (9). The invention also relates to a method for preparing at least one sample (2) for a lap shear test using such a device (1).

## Description

The invention relates to a device for use in the preparation of samples for a lap shear test and a method of preparing samples for a lap shear test using such a device.

So-called lap shear tests are often carried out to analyse and determine the adhesive strength of adhesives. In these tests, two substrates are bonded together in a defined overlap area using an adhesive to be analysed and then pulled apart to determine the maximum shear force that the bonded joint can withstand under tensile load. The results of such tests are used to assess the suitability of adhesives for various applications.

The provision of standardised samples is crucial for a systematic and reliable investigation of shear force. Depending on the test requirements, parameters such as the thickness of the adhesive layer, the area of the overlap and the dimensions and material of the substrates used can vary. In many cases, such samples are produced entirely by hand, which is both time-consuming and prone to errors.

Aids are already known from the prior art that are used to produce such specimens. For example, CN 217901333 U describes a lap shear tray for producing specimens for shear force tests, which comprises two positioning plates that can be arranged at different distances from each other with the aid of spacer strips and in each of which recesses are formed into which the substrates to be bonded together can be inserted. The recesses have different depths so that there is a defined height difference between the inserted substrates, which determines the thickness of the adhesive layer in the overlap area. As the distance between the two positioning plates can be adjusted by using different spacer strips, the size of the overlap area can be influenced. Such an aid facilitates the provision of standardised samples compared to manual production. However, it is a disadvantage that only the overlap area can be variably adjusted and, in particular, the thickness of the adhesive layer cannot be changed.

It is therefore the object of the present invention to provide a device and a method with which standardised samples for a lap shear test can be produced reliably and efficiently and which at the same time offers a greater number of variation possibilities with regard to the parameters relevant for a lap shear test.

This task is solved by a device with the features of claim 1 and by a method using such a device with the features of claim 9.

Advantageous embodiments and further developments of the invention are the subject of the dependent claims.

According to patent claim 1, the invention relates to a device for use in the preparation of samples for a lap shear test, comprising a base part on which at least one first substrate and one second substrate to be bonded to the first substrate in an overlap region can be placed, wherein first guide means and second guide means are formed on the base part, such that the first substrate can be placed on the base part in a given orientation by means of the first guide means and the second substrate can be placed on the base part in a given orientation with respect to the first substrate by means of the second guide means, wherein the guide means are designed such that the overlap region between the first substrate and the second substrate is variably adjustable. The invention is characterised in that the device comprises at least one exchangeable inlay which can be detachably connected to the base part and is provided for interposition between the base part and the second substrate, wherein the thickness D of an adhesive layer to be formed between the first substrate and the second substrate can be determined via the height H of the inlay.

In other words, the invention provides a device which is used in the preparation of samples for a lap shear test and which can also be called a lap shear tray, the device being characterised in that variable parameters such as the overlap area between a first and a second substrate and the thickness of an adhesive layer to be formed in the overlap area between the first and the second substrate can be reliably and reproducibly adjusted. For this purpose, the device comprises a base part with first and second guide means, which enable variable adjustability of the overlap region, and one or more exchangeable inlays for arrangement between the base part and the second substrate, wherein the thickness D of the adhesive layer to be formed between the first substrate and the second substrate can be determined reproducibly and independently of human judgement via the height H of the inlay. As will be explained in the following, the device according to the invention is particularly suitable for the simultaneous production of several samples, also making it possible to simultaneously produce samples which differ in their overlapping areas and/or in the thickness of the adhesive layer. In this respect, the device according to the invention offers a very high degree of flexibility combined with high accuracy in the preparation of samples for a lap shear test.

The invention solves the difficulty of reproducibly forming an adhesive layer of a defined thickness D between a first and a second substrate by providing exchangeable inlays which can be detachably connected to the base part and which are arranged between the base part and the second substrate in such a way that the height of the inlay can be used to influence a difference in height between the upper side of the first substrate placed on the base part and the lower side of the second substrate placed on the inlay and to be bonded to the first substrate. In general, an auxiliary substrate is used, which has the same height as the first substrate and which is positioned between the inlay and the second substrate. In this way, the difference in height between the upper side of the first substrate placed on the base part and the lower side of the second substrate placed on the auxiliary substrate correlates directly with the height of the inlay. The auxiliary substrate is not itself part of the sample to be produced, but merely serves as a placeholder for setting the height difference between the first and second substrates.

In principle, the inlay can be designed so that its height H corresponds exactly to the thickness D of the adhesive layer to be formed, for example 0.2 mm, and the inlay is placed on a surface of the base part in the same way as the first substrate.

However, for more reliable positioning of the inlay, according to one embodiment of the invention, it is provided that at least one recess is formed in the base part, into which recess the exchangeable inlay can be inserted, wherein the following applies for the relationship between the height H of the inlay, the depth T of the recess and the thickness D of the adhesive layer to be formed: H=T+D. In other words, the height H of the inlay in this case is greater than the thickness D of the adhesive layer to be formed by the depth T of the recess. The inlay inserted into the recess thus protrudes with part of its height beyond the edge of the recess. This part of the inlay projecting beyond the edge of the recess has a height D that corresponds exactly to the thickness of the adhesive layer to be formed. In this way, the inlay is positioned in the recess so that it cannot slip. In addition, small values of D can be realised more easily and with greater precision in terms of production technology using an inlay that can be countersunk in this way.

To prepare a sample, an inlay of a defined height H can therefore first be inserted into a recess in the base part. The height of the part of the inlay projecting beyond the edge of the recess corresponds exactly to the thickness of the adhesive layer to be formed between the first and second substrates. A first substrate is then placed on the base part, guided by the first guide means. An auxiliary substrate, which has the same height as the first substrate, is placed on the inlay as a spacer, guided by the second guide means. Adhesive is then applied to a part of the top of the first substrate from an adhesive source. Finally, the second substrate to be bonded to the first substrate to form the sample is placed on the auxiliary substrate, also guided by the second guide means, in such a way that a defined overlap area is formed between the first and second substrates, and a contact pressure is applied to the overlap area. After the adhesive has cured, the sample formed from the first and second substrates can be removed.

By using an inlay of a defined height, the thickness of the adhesive layer between the first and second substrates can be reliably and reproducibly adjusted.

According to one embodiment of the invention, the first and second guide means are formed as first and second pins which extend vertically upwards from a surface of the base part. For example, the first guide means can be formed as five first pins, by which a support area for the first substrate is delimited on three sides. Accordingly, the first pins rest against three of the side edges of a first substrate placed on the base part. The fourth side edge is generally free of vertical boundaries so as not to hinder the subsequent placement of the second substrate. The pins are arranged in such a way that there are only minimal tolerances of, for example, about 0.25 mm between the first substrate and the first pins, so that the first substrate can be positioned reliably and reproducibly.

The second guide means can be designed as four second pins, by which a support area for the second substrate is defined on two opposite sides. In other words, the second substrate can be inserted into the support area defined by the second pins so that two pins rest against each of two opposite side edges of the second substrate, whereby movement of the second substrate in a direction perpendicular to these side edges is limited, while movement guided by the second pins in a direction perpendicular thereto remains possible. By moving the second substrate within the support area defined by the second pins, it is thus possible to variably adjust the overlap area between the first substrate and the second substrate. A design of the guide means as first and second pins thus offers more flexibility than, for example, guides in the form of pocket-shaped recesses embedded in the base part, as is known from the prior art.

Nevertheless, according to the invention, it can be provided in accordance with the above explanations that a recess is provided in the base part for receiving the inlay. In this case, the second pins can extend vertically upwards from the base of the recess, whereby the exchangeable inlay can have corresponding openings through which the second pins pass when the inlay is inserted into the recess. In this way, the inlay is additionally fixed in place and the pins passing through the inlay, as described above, also serve as a guide for the auxiliary substrate and for the second substrate. The length of the second pins can be easily adapted in such a way that secure guidance of the second substrate is guaranteed. This also represents an advantage over a guide in the form of pocket-shaped recesses embedded in the base part, as such recesses would have to have a considerable depth to guide several substrates arranged on top of each other, which would make handling of the inlay and substrates more difficult. In addition, the entire base part would have to be designed with a much higher material thickness and therefore require more material. The amount of material required for the pins, on the other hand, is comparatively low.

According to one embodiment of the invention, the device comprises at least one pressure bar which can be connected to the base part and which has at least one pressure plate which is designed to apply a contact pressure to the overlap region between the first substrate and the second substrate when the pressure bar is in the position of use.

In other words, the contact pressure to be applied for reliable bonding of the first and second substrates in the overlap region can be applied with the aid of a pressure bar which can be connected to the base part, wherein the pressure bar comprises a pressure plate which comes to bear against the upper side of the second substrate in the overlap region in the position of use of the pressure bar. The pressure plate can be connected to a carrier of the pressure bar via at least one spring, so that the vertical position of the pressure plate is variable within certain limits. In this way, the position of the pressure plate can be adapted to height differences that arise depending on the height of the inlay used, and it can be ensured that the pressure plate always comes into contact with the upper side of the second substrate. The spring is designed in such a way that the contact pressure is always in a range that is suitable for forming the adhesive bond.

One embodiment of the invention provides that the base part is designed for the simultaneous preparation of a plurality of samples in such a way that several pairs of first and second substrates can be placed adjacent to one another on the base part, each second substrate being assigned an exchangeable inlay. The inlays can all be of the same design. Alternatively, it is also possible for the device to comprise several exchangeable inlays, of which at least two inlays differ in their height H. The device is thus particularly suitable for the simultaneous preparation of a large number of samples in that the base part is designed in such a way that several, for example ten, first substrates, each guided by first guide means, can be placed on the base part and likewise ten second substrates, each guided by second guide means and with intermediate placement of inlays and auxiliary substrates, can be placed on the base part.

In principle, it is possible in this way to produce several, for example ten, similar samples at the same time. However, a particular advantage of the device according to the invention is that different samples can also be produced simultaneously, in that both the size of the overlap area between the first and the second substrate as well as - by using inlays of different heights for the individual samples - the thickness of the adhesive layer can be determined individually for each individual sample in the manner described above.

Depending on the number of samples to be prepared, the device can comprise one or more pressure bars, which in turn can comprise one or more pressure plates. For example, a device that is suitable for the simultaneous preparation of ten samples can comprise two pressure beams that can be connected to the base part and that each have five pressure plates connected to a carrier of the pressure bar via springs. Each pressure plate is designed to apply a contact pressure to an overlap area between a first and a second substrate, whereby the connection of the pressure plates via springs enables individual contact pressure even if the overlap areas of the individual samples are at slightly different heights due to the use of different inlays.

According to claim 9, the invention also relates to a method for preparing at least one sample for a lap shear test using a device according to any one of claims 1 to 8, comprising the following steps:
- Providing the base part;
- Insertion of an inlay in an orientation provided by the second guide means;
- Placing a first substrate on the base part in an orientation provided by the first guide means;
- Placement of an auxiliary substrate corresponding in height to the first substrate on the inlay in an orientation provided by the second guide means;
- Application of adhesive to a section of the first substrate;
- Placement of a second substrate on the auxiliary substrate in an orientation provided by the second guide means in such a way that a defined overlap area is formed between the second and the first substrate with the adhesive interposed;
- Applying a contact pressure to the overlap area;
- Removing the cured sample from the device.

According to one embodiment of the method, the contact pressure is applied with the aid of a pressure bar which can be connected to the base part, wherein the pressure bar has at least one pressure plate which is designed to apply a contact pressure to the overlap region between the first and the second substrate when the pressure bar is in the position of use. According to this embodiment, the method thus also comprises the step of providing and connecting a pressure bar to the base part and the step of releasing the pressure bar from the base part after the sample has cured.

According to a preferred embodiment, this is a method for the simultaneous preparation of a plurality of samples, wherein an individual inlay is assigned to each second substrate and wherein two inlays can have the same height or different heights. In other words, such a method can be used to simultaneously prepare a plurality of similar or also a plurality of different samples which differ in their overlapping areas and/or in the thickness of the adhesive layer formed between the first and the second substrate. The different samples can also differ in the material of the first substrate and second substrate. Further, the different samples can differ in the thickness of the two substrates to be bonded, provided that the thickness of the first substrate is identical to the thickness of the auxiliary substrate.

Depending on the type of adhesive to be tested, the parameters of the samples to be prepared may vary. For example, the thickness of the adhesive layer can generally range from about 0.2 mm to 2.5 mm, while the overlap between the first and second substrates in the longitudinal direction of the sample is about 5 mm to 25 mm. The individual substrates usually have a thickness of 0.8 mm to 10 mm and a length of 70 mm to 120 mm and can be made of metal (for instance steel, aluminium), plastic (for instance polycarbonate, PVC, ABS, PMMA) or wood, for example.

According to one embodiment of the method, the individual process steps are carried out fully automatically. For example, all process steps, such as the insertion of the inlays and the individual substrates as well as the application of adhesive and the installation of a pressure bar, can be carried out by an appropriately programmed robot, so that the preparation of samples for a lap shear test can be carried out fully automatically and essentially without the intervention of a human worker. In particular, the exchangeable inlays of different heights allow samples with different adhesive thicknesses to be produced fully automatically in a simple manner. In addition to full automation, partial automation can of course also be provided in such a way that only individual process steps are automated. By partially or fully automating the process steps, many more samples can be produced in a short time compared to manual production. In addition, tests have shown that the thickness of the adhesive layer and the size of the overlap area can be realised much more precisely and reproducibly with the help of automated production than with manual production. This is all the more true the thinner the adhesive layer is.

In the following, the invention is explained in more detail with reference to the accompanying drawings. It shows:
- Figure 1:: a schematic view of the arrangement of the individual substrates relative to each other in a device according to the invention;
- Figure 2:: an embodiment of a base part of the device;
- Figure 3:: the base part from Figure 2 with inserted inlays;
- Figure 4:: an embodiment of a single inlay;
- Figure 5:: the device shown in Figure 3 with first substrates, second substrates and auxiliary substrates in place;
- Figure 6:: the device shown in Figure 5 with the pressure bars attached;
- Figure 7:: an embodiment of a pressure bar.

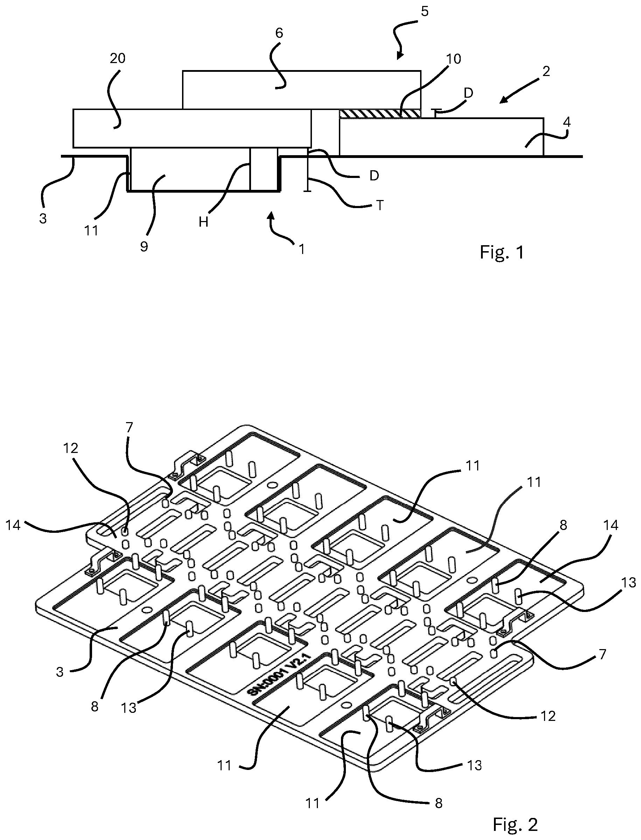

For better understanding, Figure 1 shows a schematic sectional view, not to scale, of the arrangement of the individual substrates 4, 6, 20 relative to one another in a device 1 according to the invention. The device 1 is used to prepare standardised samples 2 for a lap shear test, wherein a sample 2 is formed from a first substrate 4 and a second substrate 6 bonded to the first substrate 4 in an overlap region 5 by means of an adhesive layer 10. In a lap shear test, the two substrates 4 and 6 bonded together are pulled apart in order to determine the maximum shear force that the bonded joint can withstand under tensile load. The test results can be used to assess the suitability of adhesives for various applications.

The device 1 according to the invention is designed to produce the samples 2 with a precisely definable thickness D of the adhesive layer 10. For this purpose, the device 1 comprises a base part 3, which can be seen as a whole in Figure 2 and on which the components 9, 4, 20 and 6, which will be explained below, rest as shown in Figure 1. The base part 3 comprises recesses 11, which are formed as pocket-like indentations in the otherwise essentially flat base part 3. In the embodiment shown in Figure 2, the base part 3 comprises a total of ten recesses 11, which are arranged in two slightly offset rows of five recesses 11 each.

The preparation of a sample 2 is now explained using the illustration in Figure 1. In a first step, an inlay 9 is inserted into a recess 11 of the base part 3. The height H of the inlay 9 is greater than the depth T of the recess 11, so that the inlay 9 inserted into the recess 11 protrudes by a height D beyond the edge of the recess 11. The following relationship applies: H=T+D. The first substrate 4 is placed on the base part 3, guided by first guide means not shown in Figure 1. An auxiliary substrate 20, which has the same height as the first substrate 4, is placed on the inlay 9. Subsequently, adhesive is applied to a section of the first substrate 4 to form the adhesive layer 10. Finally, the second substrate 6 to be bonded to the first substrate 4 to form the sample 2 is placed on the auxiliary substrate 20 so that a defined overlap area 5 is formed between the first substrate 4 and the second substrate 6. The thickness D of the adhesive layer 10 corresponds exactly to the height by which the inlay 9 protrudes beyond the edge of the recess 11. Finally, a contact pressure is applied to the overlap area 5 so that the two substrates 4 and 6 are reliably bonded together. The cured sample 2 can now be removed from the device 1.

The thickness D of the adhesive layer 10 can thus be reliably determined via the height H of the selected inlay 9. In particular, as will be explained below, it is possible with the aid of the device 1 to simultaneously produce several samples 2, which can differ in the size of the overlap area 5 and/or in the thickness of the adhesive layer 10.

As already explained above, the embodiment of a base part 3 shown in Figure 2 comprises a total of ten recesses 11 and is therefore suitable for the simultaneous preparation of a total of ten samples 2. To guide and thus correctly align the individual components, first guide means 7 in the form of first pins 12 and second guide means 8 in the form of second pins 13 are formed on the base part 3. The first and second pins 12, 13 extend vertically upwards from a surface 14 of the base part 3, wherein the first pins 12 are arranged in a central region of the base part 3 and the second pins 13 are arranged in lateral regions of the base part 3, in particular in the region of the recesses 11.

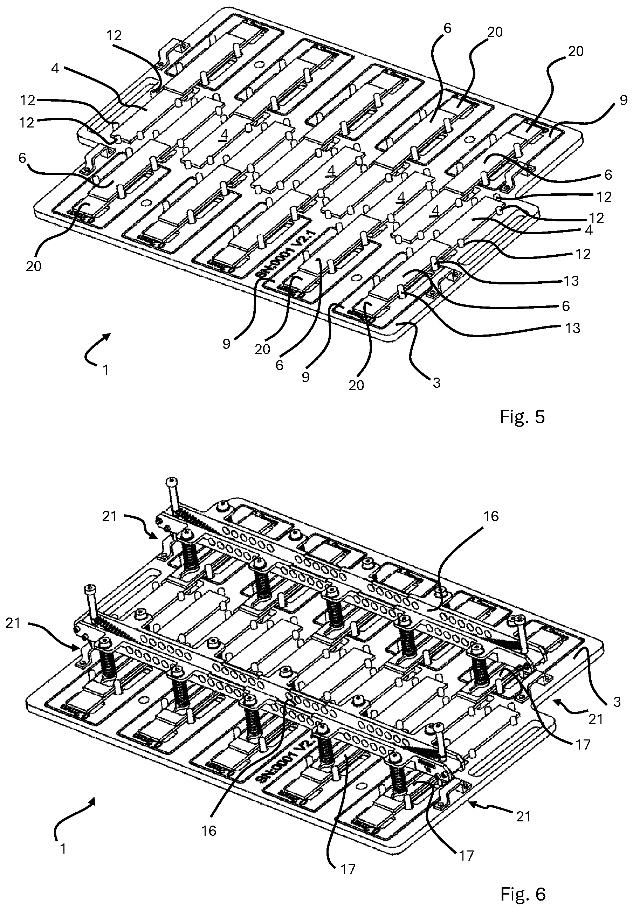

With the aid of the first pins 12, first substrates 4 can be placed on the base part 3 in an intended alignment, with five first pins 12 each being provided for guiding a first substrate 4, which is explained in more detail below with reference to Figure 5. The correct alignment of the first substrates 4 is crucial insofar as the positioning of the adhesive source is matched to this alignment. Accordingly, the second pins 13 can be used to place second substrates 6 and auxiliary substrates 20 on the base part 3 in an intended orientation with respect to the first substrates 4.

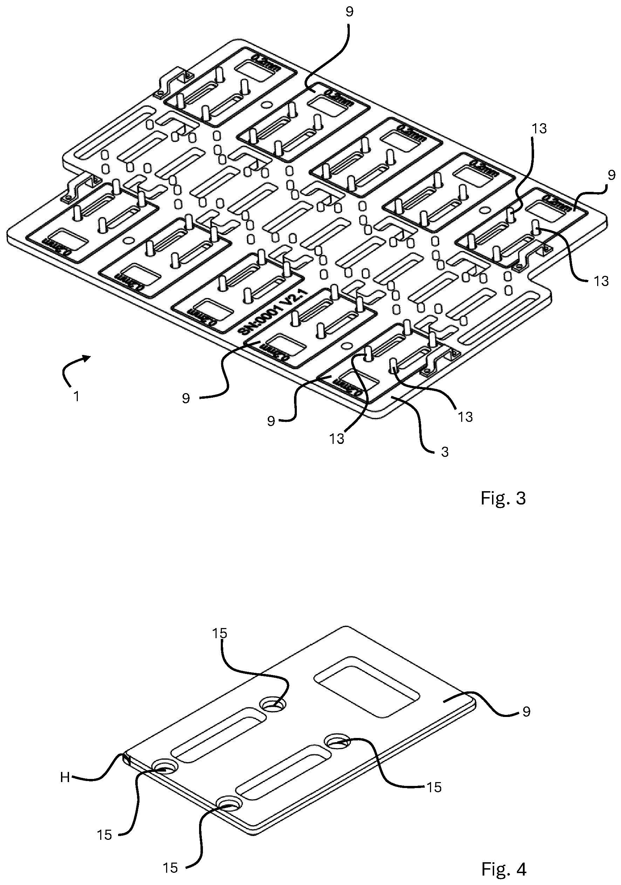

Figure 3 shows a state of the device 1 in which an inlay 9 has been inserted into each recess 11 of the base part 3. A single such inlay 9 can be seen in Figure 4. The inlay 9 has four circular openings 15 through which the second pins 13 pass in the insert position of the inlay 9, see Figure 3. The inlays 9 are thus fixed in their position both by their position within the recesses 11 and by the second pins 13 passing through them. The height H of the inlays 9 is dimensioned in such a way that the inlays 9 project beyond the edge of the recesses 11, namely by exactly that height which corresponds to the thickness of the adhesive layer 10 to be formed later between a first substrate 4 and a second substrate 6. In the embodiment shown in Figure 3, identical inlays 9 are inserted into the recesses 11, all of which protrude beyond the edge of the recesses 11 by 0.2 mm. Accordingly, samples 2 with a 0.2 mm thick adhesive layer 10 can be produced with such an arrangement. In particular, however, it is also possible to insert different inlays 9, which differ in their height H, into the individual recesses 11. With such an arrangement, several samples 2 with adhesive layers 10 of different thicknesses can be formed simultaneously.

Figure 5 shows a state of the device 1 in which ten first substrates 4 have been placed on the base part 3 in parallel alignment with one another in a central region of the base part 3. As already explained above, each first substrate 4 is guided and aligned by five first pins 12, with two pins 12 resting against each of the two long sides and one pin 12 resting against an end face of a first substrate 4. By analogy with the representation of Figure 1, an auxiliary substrate 20 is placed on each inlay 9 and - after adhesive has been applied to a section of each first substrate 4 - a second substrate 6 is placed on each auxiliary substrate 20, the auxiliary substrates 20 and the second substrates 6 being guided and aligned with the aid of the second pins 13 passing through the inlays 9. Each auxiliary substrate 20 or each second substrate 6 is guided by four second pins 13, of which two second pins 13 in each case rest against a long side of the auxiliary substrate 20 or the second substrate 6. In this way, the second substrates 6 can be displaced in their longitudinal direction between the associated second pins 13, so that overlapping areas 5 of different sizes can be formed between the first substrates 4 and the second substrates 6. In particular, several samples 2 can also be produced simultaneously in this way, which differ in their overlap areas 5.

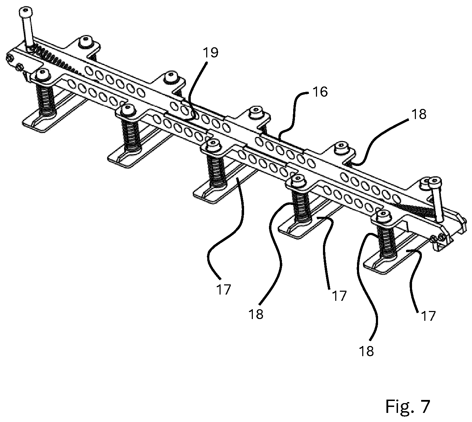

Finally, Figure 6 shows a state of the device 1 in which, starting from the state shown in Figure 5, two pressure bars 16 have been connected to the base part 3. Figure 7 shows such a pressure bar 16 in isolated representation. The pressure bars 16 are each connected to the base part 3 in edge-side connection regions 21 by means of a self-locking mechanism and are designed to apply a contact pressure of approximately 40 N to each overlap region 5 between a first substrate 4 and a second substrate 6 in the position of use. For this purpose, each pressure bar 16 comprises five pressure plates 17, which extend at equal distances transversely to the longitudinal extension of the pressure bar 16. As can be seen from Figure 6, always one pressure plate 17 is in contact with one overlap region 5, whereby the pressure plates 17 are also guided between the second pins 13. The pressure plates 17 are each connected to a carrier 19 of the pressure bar 16 via two springs 18, see Figure 7. In this way, it can be ensured that the individual pressure plates 17 are in contact with the overlap areas 5 in a pressing manner even if the overlap areas 5 of the individual samples 2 are at slightly different heights due to the use of different inlays 9. The pressure bar 16 can, for example, be designed in such a way that the pressure plates 17 can adapt to height differences of up to about 17 mm.

The base part 3, the first and second pins 12, 13, the inlays 9 and the pressure bars 16 can be made of hardened steel, for example. A tolerance between the inserted substrates and the first and second pins can be less than 1 mm, for example about 0.25 mm. In the embodiment example described, the length of the individual substrates is approximately 90-110 mm and the width is approximately 22-26 mm.

The device 1 described is particularly suitable for use in a fully automated process in which the individual process steps are carried out fully automatically. For example, all process steps can be carried out by an appropriately programmed robot, so that the preparation of samples 2 for a lap shear test can be carried out fully automatically and essentially without the intervention of a human worker. In particular, the exchangeable inlays 9 of different heights H allow samples 2 with different thicknesses D of the adhesive layers to be produced fully automatically in a simple manner.

### List of reference symbols

- 1: device
- 2: sample
- 3: base part
- 4: first substrate
- 5: overlap area
- 6: second substrate
- 7: first guide means
- 8: second guide means
- 9: inlay
- 10: adhesive layer
- 11: recess
- 12: first pins
- 13: second pins
- 14: surface
- 15: opening
- 16: pressure bar
- 17: pressure plate
- 18: spring
- 19: carrier
- 20: auxiliary substrate
- 21: connection area

## Claims

1. Device (1) for use in the preparation of samples (2) for a lap shear test, comprising a base part (3) on which at least one first substrate (4) and one second substrate (6) to be bonded to the first substrate (4) in an overlap region (5) can be placed, wherein first guide means (7) and second guide means (8) are formed on the base part (3), such that the first substrate (4) can be placed on the base part (3) in a given orientation by means of the first guide means (7) and the second substrate (6) can be placed on the base part (3) in a given orientation with respect to the first substrate (4) by means of the second guide means (8), wherein the guide means (7, 8) are designed such that the overlap region (5) between the first substrate (4) and the second substrate (5) is variably adjustable, **characterised in that** the device (1) comprises at least one exchangeable inlay (9), which can be detachably connected to the base part (3) and is provided for interposition between the base part (3) and the second substrate (6), wherein the thickness D of an adhesive layer (10) to be formed between the first substrate (4) and the second substrate (6) can be determined via the height H of the inlay (9).

2. Device (1) according to claim 1, **characterised in that** at least one recess (11) is formed in the base part (3), into which recess (11) the exchangeable inlay (9) can be inserted, wherein the following applies to the relationship between the height H of the inlay (9), the depth T of the recess (11) and the thickness D of the adhesive layer (10) to be formed: H=T+D.

3. Device (1) according to claim 1 or 2, **characterised in that** the first and second guide means (7, 8) are designed as first and second pins (12, 13) which extend vertically upwards from a surface (14) of the base part (3).

4. Device (1) according to claim 3, **characterised in that** the exchangeable inlay (9) has openings (15) through which the second pins (13) pass when the inlay (9) is inserted into the recess (11).

5. Device (1) according to one of claims 1 to 4, **characterised in that** the device (1) comprises at least one pressure bar (16) which can be connected to the base part (3) and which has at least one pressure plate (17) which is designed to apply a contact pressure to the overlap region (5) between the first substrate (4) and the second substrate (6) when the pressure bar (16) is in the position of use.

6. Device (1) according to claim 5, **characterised in that** the pressure plate (17) is connected to a carrier (19) of the pressure bar (16) via at least one spring (18).

7. Device (1) according to one of claims 1 to 6, **characterised in that** the base part (3) is designed for the simultaneous preparation of a plurality of samples (2) in such a way that several pairs of first substrates (4) and second substrates (6) can be placed adjacent to one another on the base part (3), each second substrate (6) being assigned an exchangeable inlay (9).

8. Device (1) according to one of claims 1 to 7, **characterised in that** the device (1) comprises a plurality of exchangeable inlays (9), wherein at least two inlays (9) differ in their height H.

9. A method for preparing at least one sample (2) for a lap shear test using a device (1) according to any one of claims 1 to 8, comprising the following steps:
- Providing the base part (3);
- Insertion of an inlay (9) in an orientation provided by the second guide means (8);
- Placement of a first substrate (4) on the base part (3) in an orientation provided by the first guide means (7);
- Placement of an auxiliary substrate (20) corresponding in height to the first substrate (4) on the inlay (9) in an orientation provided by the second guide means (8);
- Application of adhesive to a section of the first substrate (4);
- Placement of a second substrate (6) on the auxiliary substrate (20) in an orientation provided by the second guide means (8) in such a way that a defined overlap area (5) is formed between the second substrate (6) and the first substrate (4) with the adhesive interposed;
- Applying a contact pressure to the overlap area (5);
- Removing the cured sample (2) from the device (1).

10. Method according to claim 9, **characterised in that** the contact pressure is applied with the aid of a pressure bar (16) which can be connected to the base part (3), the pressure bar (16) having at least one pressure plate (17) which is designed to apply a contact pressure to the overlap region (5) between the first substrate (4) and the second substrate (6) when the pressure bar (16) is in the position of use.

11. Method according to claim 9 or 10 for the simultaneous production of a plurality of samples (2), wherein an individual inlay (9) is assigned to each second substrate (6) and wherein two inlays (9) can have the same height or different heights.

12. Method according to one of claims 9 to 11, wherein the process steps are carried out fully automatically.
